# EUROPÄISCHE PATENTSCHRIFT

(11) **EP 0 622 013 B1**
(45) Veröffentlichungstag und Bekanntmachung des Hinweises auf die Patenterteilung: **23.09.1998**
(21) Anmeldenummer: 94105002.3
(22) Anmeldetag: 30.03.1994
(51) Int. Cl.: A01F 7/06

(54) **Axialabscheidevorrichtung**
Axial separating device
Dispositif pour séparer axial

(30) Priorität: 26.04.1993 US 53033
(43) Veröffentlichungstag der Anmeldung: 02.11.1994
(73) Patentinhaber: Deere & Company, Moline, Illinois 61265-8098 (US)
(72) Erfinder: Soots, Daniel L., East Moline, Illinois 61244 (US); Braunhardt, Klaus Adam, Bettendorf, Iowa 52722 (US)
(74) Vertreter: Feldmann, Bernhard

(56) Entgegenhaltungen:
- DE-A- 2 430 303
- DE-B- 1 297 390
- GB-A- 1 511 422
- US-A- 4 248 248
- US-A- 5 145 462

## Beschreibung

Die Erfindung betrifft eine Axialabscheidevorrichtung mit einem Rotorgehäuse und einem in diesem drehbar gelagerten Rotor mit wenigstens einem schneckenförmigen Leitblech auf einer Rotortrommel.

Bei nach dem Axialfluß arbeitenden Mähdreschern ist in einem zylindrischen Gehäuse ein ebenfalls zylindrischer Rotor drehbar gelagert. Zur Lagerung ist an der vorderen Stirnseite eine Welle oder ein Wellenstummel vorgesehen, die in einem auf einer Querstrebe des Mähdreschers befestigten Drehlager gehalten wird. Auf dem Außenumfang des Rotors befinden sich Dresch- und Abscheideelemente, mit denen z. B. Getreide vom Halm getrennt wird. Zur Zufuhr des Dreschguts in einen Spalt zwischen dem Rotor und dem Rotorgehäuse wird z. B. nach der US-A-4,148,323, der US-A-4,266,560 oder der US-A-4,367,757 eine Schnecke vorgesehen, die das Erntegut heranzieht. Sowohl mit als auch ohne Schnecken sind die Aufnahmebereiche der Rotoren zuweilen konisch ausgebildet, um eine bessere Gutannahme zu erreichen.

Es hat sich gezeigt, daß unter manchen Erntebedingungen das aufgenommene Erntegut wieder nach vorne und in den Bereich des Drehlagers des Rotors fällt und dort Staus verursacht.

Die US-A-4,248,248 offenbart einen Mähdrescher mit einer Axialdreschvorrichtung, die eine zylindrische Trommel und darauf befestigte wendelförmige Förderleisten enthält. In dem Aufnahmebereich der Axialdreschvorrichtung beginnen die Förderleisten an umfangsmäßig verschiedenen Stellen und tragen Fangbleche, die eine größere radiale Erstreckung aufweisen als die Förderleisten in diesem Bereich. Auf diese Weise soll eine bessere Gutannahme in einem konischen Einzugsgehäuse erreicht werden.

Die der Erfindung zugrunde liegende Aufgabe wird darin gesehen, eine Axialabscheidevorrichtung vorzuschlagen, die eine noch zuverlässigere Annahme des Ernteguts gewährleistet.

Diese Aufgabe wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise, d. h. durch die Anbringung einer Vertiefung und einer Anfangsplatte wird die Bewegung des Ernteguts nach vorne zu dem Drehlager oder in den Aufnahmebereich überhaupt verhindert und Gutstauungen unterbleiben. Die Ausnehmung wie auch die Anfangsplatte dienen gleichermaßen als axialer Wegbegrenzer für das Erntegut.

Um zu vermeiden, daß sich das Erntegut am Anfang des Leitblechs verfängt oder von diesem zurückgeworfen wird, verläuft der Anfang des Leitblechs schräg von radial innen nach außen.

Die Ausnehmung im Bereich der Oberkante des Leitblechs braucht nicht in diese selbst eingebracht zu werden, sondern kann auch durch eine entsprechende Formgebung des Anschlusses des Leitblechs an die Anfangsplatte gebildet werden.

Damit die Verwendung einer oder mehrerer Anfangsplatten stromaufwärts eines oder mehrerer Leitbleche nicht zu Dreschgutannahmeproblemen führt, ist vorgesehen, daß die Anfangsplatte in Drehrichtung des Rotors gesehen von einer Stelle geringer Höhe bis zu einer Grundkante großer Höhe schräg nach außen verläuft, d. h. ihre Außenkante verläuft in etwa tangential.

Ein guter Dreschgutübergang zwischen der Anfangsplatte und der Vorderkante des Leitblechs ergibt sich jedenfalls dann, wenn das Leitblech an die Anfangsplatte zwischen deren besagte Stelle und deren Grundkante angreift, insbesondere angeschweißt ist.

Die Ausnehmung ergibt sich auf einfache Weise durch einen Anschluß des Leitblechs derart, daß die Oberkante des Leitblechs unterhalb von der Oberkante der Anfangsplatte an dieser angreift.

In der Zeichnung ist ein nachfolgend näher beschriebenes Ausführungsbeispiel der Erfindung dargestellt. Es zeigt:
- Fig. 1: einen Mähdrescher in schematischer Darstellung und in Seitenansicht mit einem erfindungsgemäßen Aufnahmebereich eines Rotors,
- Fig. 2: den Aufnahmebereich des Rotors in Seitenansicht und

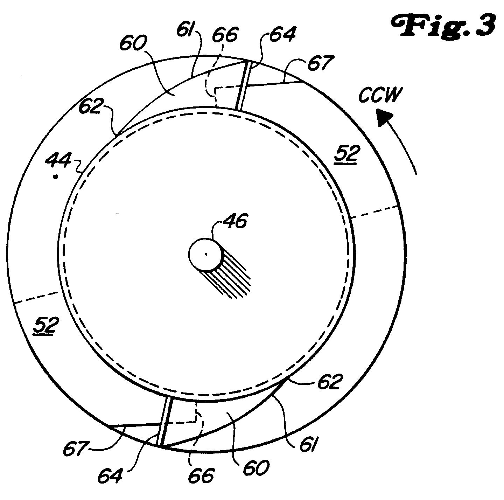

- Fig. 3: den Aufnahmebereich des Rotors in Vorderansicht.

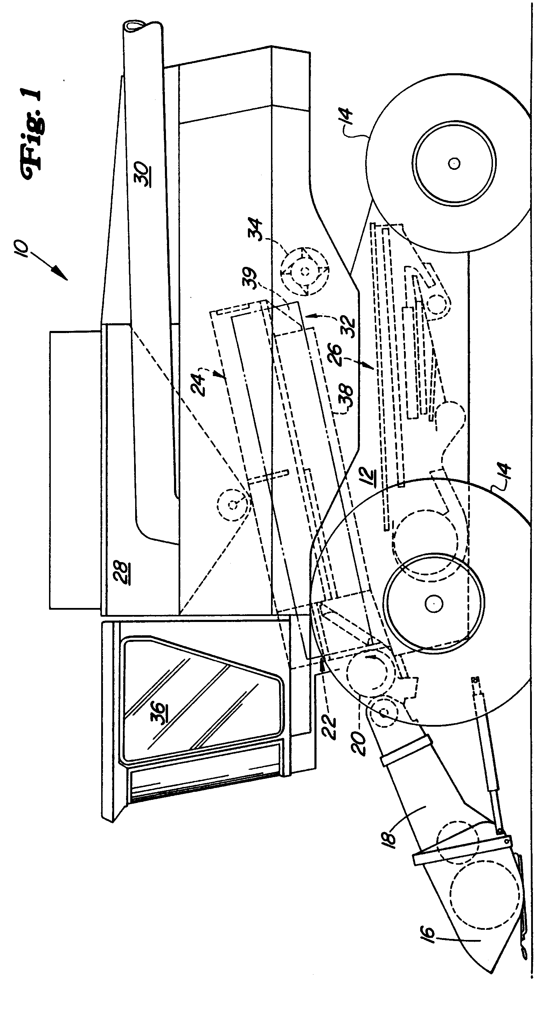

Figur 1 zeigt einen Mähdrescher 10 mit einem Fahrgestell 12, das sich über von ihm abstehende Laufräder 14 auf dem Boden abstützt und über ein Feld bewegt wird. Eine Erntebergungsvorrichtung 16 befindet sich an der Mähdreschervorderseite und dient dazu, Erntegut vom Boden aufzunehmen und es über einen Schrägförderer 18 einer Trommel 20 zuzuführen. Die Trommel 20 überführt das Erntegut über einen Zufuhrbereich 22 nach oben zu einer Axialabscheidevorrichtung 24.

Die Axialabscheidevorrichtung 24 drischt das Erntegut und trennt es in verschiedene Bestandteile. Das Korngut - Getreide - und die Spreu fallen durch einen Rost an der Unterseite der Axialabscheidevorrichtung 24 einem Reinigungssystem 26 zu. Das Reinigungssystem 26 entfernt die Spreu und gibt das gereinigte Korngut einem nicht gezeigten Körnerelevator auf. Der Körnerelevator liefert das Korngut in einen Korntank 28, aus dem es mittels eines Entleerrohrs 30 in einen Anhänger oder dergleichen entladen werden kann.

Gedroschenes und abgeschiedenes Stroh wird aus der Axialabscheidevorrichtung 24 durch einen Auslaß 32 zu einer Trommel 34 geführt. Die Trommel 34 selbst schleudert das Stroh aus dem rückwärtigen Ende des Mähdreschers 10. Die Bedienung des Mähdreschers 10 erfolgt von einer Fahrerkabine 36 aus.

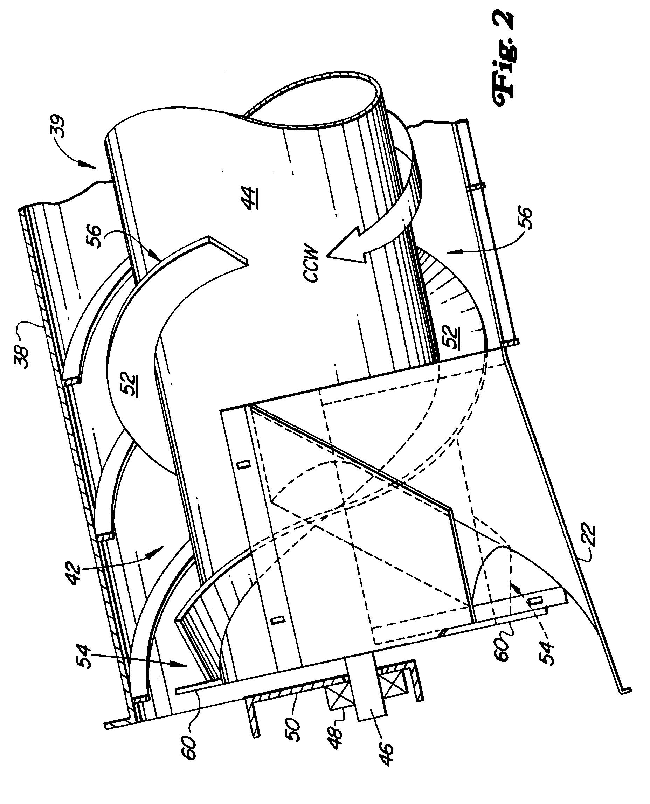

Die Axialabscheidevorrichtung 24 enthält ein zylindrisches Rotorgehäuse 38 und einen innerhalb von diesem drehbar angeordneten Rotor 39. Das Rotorgehäuse 38 ist mit einem Zufuhrbereich 22 versehen, in dem sich ein Aufnahmebereich des Rotors 39 befindet. Der Rotor 39 dreht mit Blick auf Figur 2 entgegen dem Uhrzeigerdrehsinn, was der Sichtweise eines vor dem Mähdrescher 10 stehenden und zu dessen rückwärtigen Ende schauenden Betrachters entspricht; sh. auch den Pfeil CCW (Counter Clockwise). In einem Ausführungsbeispiel, in dem der Rotor 39 in die andere Richtung dreht, wäre die Ausbildung bzw. die Anordnung in dem Zufuhrbereich 22 und dem Aufnahmebereich spiegelbildlich hierzu auszugestalten. Der Rotor 39 weist eine Rotortrommel 44 mit einer Stummelwelle 46 auf, die in einem Stützlager 48 gehalten ist. Das Stützlager 48 ist auf einen Querträger 50 montiert, der an Seitenwänden des Mähdreschers 10 angebracht ist, die Teil des Fahrgestells 12 des Mähdreschers 10 sind.

Der Aufnahmebereich der Rotortrommel 44 stellt sich als ein zylindrischer Teil dar, der sich nach außen erstreckende schneckenförmige Leitbleche oder Mitnehmer 52 besitzt. Jedes Leitblech 52 besitzt ein stromaufwärts und ein stromabwärts gelegenes Ende 54 und 56, die die Bewegung des Ernteguts durch die Axialabscheidevorrichtung 24 wiedergeben. Die stromaufwärts liegenden Enden 54 der schneckenförmigen Leitbleche 52 sind angeschrägt und beginnen an einer quer zur Längsachse des Rotors 39 verlaufenden Anfangsplatte 60. Die Anfangsplatte 60 enthält ebenfalls eine angeschrägte Vorlaufkante 61, die in der Drehrichtung des Rotors 39 verläuft, um somit ein Festhängen von Stroh und anderem Erntegut auf oder an der Anfangsplatte 60 zu verhindern.

Das schräg anlaufende, schneckenförmige Leitblech 52 ist an einer Stelle 66 an die Anfangsplatte 60 angeschweißt, und zwar zwischen einer Stelle 62 am Beginn der Schräge, also bei geringer radialer Erstreckung und einer Grundkante 64 der quer verlaufenden Anfangsplatte 60. Eine Oberkante 67 des schräg anlaufenden Leitblechs 52 befindet sich unterhalb der schräg verlaufenden Kante der quer verlaufenden Anfangsplatte 60 an der Verbundstelle 66. Auf diese Weise bildet sich zwischen dem schräg anlaufenden Leitblech 52 und der sich quer erstreckenden Anfangsplatte 60 eine Nut, Ausnehmung oder Tot-Zone, in der das Erntematerial zeitweise gefangen ist, wenn es nach vorne von dem oder den Leitblechen 52 wegrutschen sollte. Das Erntegut bleibt so lange in dieser Ausnehmung gefangen, bis es aufgrund der Zentrifugalkraft von dem Rotor 39 nach außen gegen das Rotorgehäuse 38 geschleudert wird. Allerdings kann die genannte Ausnehmung auch auf eine andere Weise gebildet werden.

## Patentansprüche

1. Axialabscheidevorrichtung mit einem Rotorgehäuse (38) und einem in diesem drehbar gelagerten Rotor (39) mit wenigstens einem schneckenförmigen Leitblech (52) auf einer Rotortrommel (44), dadurch gekennzeichnet, daß im Aufnahmebereich des Rotors (39) im Bereich der radial außenliegenden Oberkante (67) des Leitblechs (52) eine Ausnehmung und stromaufwärts des Leitblechs (52) eine sich quer zur Drehachse des Rotors (39) erstreckende Anfangsplatte (60) vorgesehen ist.

2. Axialabscheidevorrichtung nach Anspruch 1, dadurch gekennzeichnet, daß der Anfang des Leitblechs (52) schräg von radial innen nach außen verläuft.

3. Axialabscheidevorrichtung nach Anspruch 1 oder 2, dadurch gekennzeichnet, daß zwischen der Anfangsplatte (60) und dem stromaufwärts gelegenen Ende des Leitblechs (52) eine Ausnehmung gebildet ist.

4. Axialabscheidevorrichtung nach einem oder mehreren der vorherigen Ansprüche, dadurch gekennzeichnet, daß die Anfangsplatte (60) in Drehrichtung des Rotors (39) gesehen von einer Stelle (62) geringer Höhe bis zu einer Grundkante (64) großer Höhe schräg nach außen verläuft.

5. Axialabscheidevorrichtung nach Anspruch 4, dadurch gekennzeichnet, daß das Leitblech (52) an die Anfangsplatte (60) zwischen deren Stelle (62) und deren Grundkante (64) angreift, insbesondere angeschweißt ist.

6. Axialabscheidevorrichtung nach den Ansprüchen 2 und 5, dadurch gekennzeichnet, daß die Oberkante (67) des Leitblechs (52) unterhalb der Oberkante der Anfangsplatte (60) an dieser angreift.

## Claims

1. An axial separating device with a rotor housing (38) and a rotor (39) rotatably mounted therein, with at least one helical guide vane (52) on a rotor drum (44), characterized in that in the receiving region of the rotor (39) there are provided a recess in the region of the radially outer upper edge (67) of the guide vane (52) and a leading blade (60) upstream of the guide vane (52) and extending transverse to the axis of rotation of the rotor (39).

2. An axial separating device according to claim 1, characterized in that the start of the guide vane (52) runs obliquely from radially inside to outside.

3. An axial separating device according to claim 1 or 2, characterized in that a recess is formed between the leading blade (60) and the upstream end of the guide vane (52).

4. An axial separating device according to one or more of the preceding claims, characterized in thht the leading blade (60) extends obliquely outwards from a point (62) of smaller height up to a base edge (64) of greater height, as regarded in the direction of rotation of the rotor (39).

5. An axial separating device according to claim 4, characterized in that the guide vane (52) engages and is especially welded on the leading blade (60) between its point (62) and its base edge (64).

6. An axial separating device according to claims 2 and 5, characterized in that the upper edge (67) of the guide vane (52) engages the leading blade (60) below the upper edge thereof.

## Revendications

1. Séparateur axial comportant un carter de rotor (38) et un rotor (39) monté de manière à pouvoir tourner dans ce carter et comportant au moins une tôle de guidage de forme hélicoïdale (52) située sur un tambour (44) du rotor, caractérisé en ce qu'un évidement est prévu, dans la zone de réception du rotor (39), au niveau du bord supérieur (67), situé radialement à l'extérieur, de la tôle de guidage (52) et qu'une plaque de départ (60), qui s'étend transversalement par rapport à l'axe de rotation du rotor (39), est prévue en amont de la tôle de guidage (52).

2. Séparateur axial selon la revendication 1, caractérisé en ce que le début de la tôle de guidage (52) s'étend obliquement et radialement de l'intérieur vers l'extérieur.

3. Séparateur axial selon la revendication 1 ou 2, caractérisé en ce qu'un évidement est formé entre la plaque de départ (60) et l'extrémité, située en amont, de la tôle de guidage (52).

4. Séparateur axial selon une ou plusieurs des revendications précédentes, caractérisé en ce que la plaque de départ (60) s'étend obliquement vers l'extérieur lorsqu'on regarde dans le sens de rotation du rotor (39), depuis un point (62) de faible hauteur jusqu'à un bord de base (64) possédant une grande hauteur.

5. Séparateur axial selon la revendication 4, caractérisé en ce que la tôle de guidage (52) se raccorde à la plaque de départ (60), notamment en y étant soudée, entre le point (62) et le bord de base (64) de la plaque de départ.

6. Séparateur axial selon les revendications 2 et 5, caractérisé en ce que le bord supérieur (67) de la tôle de guidage (52) se raccorde à la plaque de départ (60) au-dessous du bord supérieur de cette dernière.
